(19) Europäisches Patentamt
European Patent Office
Office européen des brevets

(11) **EP 3 341 332 B1**

(12) **FASCICULE DE BREVET EUROPEEN**

(45) Date de publication et mention de la délivrance du brevet:
**20.11.2024   Bulletin 2024/47**

(21) Numéro de dépôt: **16759878.8**

(22) Date de dépôt: **26.08.2016**

(51) Classification Internationale des Brevets (IPC):
**C02F 3/12** *(2023.01)*     **C02F 1/00** *(2023.01)*
**C02F 1/52** *(2023.01)*     **C02F 9/00** *(2023.01)*
**B01D 21/00** *(2006.01)*     **B01D 21/02** *(2006.01)*
**B01D 21/24** *(2006.01)*     **B01D 21/30** *(2006.01)*

(52) Classification Coopérative des Brevets (CPC):
**C02F 3/1215; C02F 3/006;** C02F 11/121;
C02F 2209/10; C02F 2209/40; Y02W 10/10

(86) Numéro de dépôt international:
**PCT/IB2016/055111**

(87) Numéro de publication internationale:
**WO 2017/033160 (02.03.2017 Gazette 2017/09)**

(54) **PROCÉDÉ DE TRAITEMENT DES EAUX USÉES COMPORTANT UN DÉCANTEUR STATIQUE RAPIDE ET INSTALLATION ASSOCIÉE**

VERFAHREN ZUR BEHANDLUNG VON ABWASSER MIT EINEM SCHNELLEN STATISCHEN DEKANTER UND ENTSPRECHENDE EINRICHTUNG

METHOD FOR TREATING WASTE WATER COMPRISING A QUICK STATIC DECANTER AND ASSOCIATED FACILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.08.2015   FR 1557959**

(43) Date de publication de la demande:
**04.07.2018   Bulletin 2018/27**

(73) Titulaire: **Suez International**
**92040 Paris la Défense Cedex (FR)**

(72) Inventeurs:
• **PUJOL, Roger**
  **78580 Bazemont (FR)**

• **ARNAUD, Patrick**
  **77950 Rubelles (FR)**
• **DONNAZ, Sylvain**
  **78950 Gambais (FR)**

(74) Mandataire: **LLR**
**2, rue Jean Lantier**
**75001 Paris (FR)**

(56) Documents cités:
WO-A1-2010/073222     FR-A1- 2 784 093
FR-A1- 2 820 733     FR-A1- 3 005 311
JP-A- H06 328 092     JP-A- H06 335 694
US-A- 4 130 481     US-B1- 6 589 428
US-B1- 6 811 706

EP 3 341 332 B1

**Description**

La présente invention se rapporte au domaine du traitement des eaux usées et concerne en particulier une installation comportant un décanteur statique rapide pour épaissir les boues avant leur traitement dans une unité de déshydratation. L'invention porte également sur un procédé de traitement des eaux usées mettant en oeuvre le décanteur statique rapide.

L'invention s'applique aux filières dites « boues » de procédés industriels et plus spécifiquement, mais pas exclusivement, aux filières boues de station de traitement des eaux. Les stations de traitement des eaux usées sont constituées généralement de deux files de traitement principales : une file dite « eau » et une file dite « boue », chacune comprenant plusieurs unités ou procédés ayant une fonction spécifique. La capacité des installations est conçue pour traiter 100 % de la pollution reçue, soit un taux de charge de 100 %. Lors de la conception, les unités de la file « boue » sont dimensionnées par rapport à la quantité de biomasse nominale présente dans le réacteur biologique (5 gMES/L) et qui correspond au taux de charge de l'usine de 100 %. Or, la majorité des stations de traitement des eaux usées sont sous-chargées car elles reçoivent en moyenne 40 à 50 % de pollution.

Les enjeux actuels d'économie d'énergie et d'efficacité énergétique nécessitent d'optimiser à la fois la consommation des procédés de la file « eau » et de la file « boue ».

L'optimisation du ratio énergétique de l'usine de traitement passe par la diminution de la concentration de biomasse au sein du réacteur biologique (bassin d'aération) de la file eau. Cette baisse de concentration de 5 gMES/L (100 % de pollution) à 2 gMES/L (50% de pollution) est accompagnée d'un gain énergétique significatif de l'aération et d'une amélioration significative de la qualité de la boue biologique (disparition des mousses et gain de capacité de la clarification sur la file eau, gain sur le pouvoir drainant sur la file boue).

Or, une majorité des stations d'épuration n'est pas équipée d'étape d'épaississement avant déshydratation ce qui empêche la mise en oeuvre de la diminution de concentration au sein des bassins d'aération.

Cependant, il est connu des installations de traitement des eaux usées comme celle par exemple décrite dans les documents US 6 589 428 B1, FR 2 820 733 A1, FR 2 784 093 A1 et WO2010/073222. Dans une telle installation, un épaississeur est installé entre le réacteur biologique ou le dégazeur et l'unité de déshydratation. Il s'agit d'un décanteur permettant in fine un fonctionnement optimisé de la file « eau » et de la file « boue ». L'effluent provenant du clarificateur et constituant les boues liquides entrant dans le décanteur, présente une concentration variable en matières en suspension, pouvant aller de 2 à 8 g/L. Les boues épaissies, extraites du décanteur peuvent présenter une concentration en matières en suspension de 5 à 15 g/L. Ces boues sont ensuite soumises à un traitement de déshydratation afin de réduire leur volume. Pour éviter un relargage du phosphore par les bactéries, il faut réduire au minimum le temps qui s'écoule entre la sortie du clarificateur et l'entrée de l'appareil de déshydratation des boues. De ce fait, il est intéressant de recourir à un décanteur statique rapide qui permet de satisfaire à cette exigence de temps réduit.

Toutefois, l'étape de décantation accélérée proposée dans le document WO2010/073222 nécessite la consommation de polymère (destiné à favoriser la décantation) ainsi qu'un réacteur de taille importante doté d'une configuration en sortie plutôt lourde (large empreinte au sol, section tronconique, dispositif de raclage) en vue d'éliminer au maximum les matières en suspension.

L'invention a donc pour but, surtout, de fournir un procédé de traitement mettant en oeuvre une étape de décantation rapide sans avoir recours à un polymère, et au moyen d'un réacteur de décantation simplifié et d'empreinte au sol réduite.

A cet effet, l'invention a pour objet un procédé de traitement d'eaux usées comportant en amont au moins une étape de traitement par boues activées dans un bassin d'aération, et en aval au moins une étape de décantation dans un décanteur statique rapide sans avoir recours à un polymère, la décantation permettant de pré-épaissir une fraction de boue issue directement ou indirectement de l'étape de traitement par boues activées, avant son extraction en direction d'une unité de traitement par déshydratation, le décanteur statique rapide comprenant un réacteur, des moyens d'admission de la fraction de boue en entrée du réacteur, des moyens de régulation du débit volumique $Q_e$ en entrée du réacteur, des moyens d'extraction de la fraction de boue en sortie du réacteur, des moyen de régulation du débit volumique $Q_s$ en sortie du réacteur, caractérisé en ce que dans l'étape de décantation, en régime établi :

- la valeur du débit volumique $Q_s$ de la fraction de boue en sortie du réacteur dépend:

  • d'une valeur de consigne $CM_{s0}$ de la charge massique en sortie du réacteur,
  • et de la concentration $C_s$ de matières en suspensions dans la boue mesurée en sortie du réacteur, de sorte que : $Q_s = CM_{s0} / C_s$, et

- la valeur du débit volumique $Q_e$ de la fraction de boue en entrée du réacteur dépend:

  • d'une valeur de consigne $CM_{e0}$ de la charge massique en entrée du réacteur,

- et de la concentration Ce de matières en suspensions dans la boue mesurée en entrée du réacteur, de sorte que : $Q_e = CM_{e0} / C_e$

avec :

- la valeur de consigne $CM_{s0}$ de la charge massique en sortie du réacteur étant la charge massique nominale $CM_{5nom}$ propre à l'unité de traitement par déshydratation (5),
- la valeur de consigne $CM_{e0}$ de la charge massique en entrée du réacteur étant telle que : $1,1\ CM_{s0} \leq CM_{e0}$.

Le procédé peut comprendre la régulation de l'étape de décantation en régime établi de sorte que :

- le débit volumique $Q_s$ de la fraction de boue en sortie du réacteur est ajusté en fonction d'une valeur de consigne $CM_{s0}$ de la charge massique en sortie du réacteur, et en fonction de la concentration $C_s$ de matières en suspensions dans la boue mesurée en sortie du réacteur, de sorte que : $Q_s = CM_{s0} / C_s$,
- le débit volumique $Q_e$ de la fraction de boue en entrée du réacteur est ajusté en fonction d'une valeur de consigne $CM_{e0}$ de la charge massique en entrée du réacteur, et en fonction de la concentration Ce de matières en suspensions dans la boue mesurée en entrée du réacteur, de sorte que : $Q_e = CM_{e0} / C_e$,

avec :

- la valeur de consigne $CM_{s0}$ de la charge massique en sortie du réacteur étant la charge massique nominale $CM_{5nom}$ propre à l'unité de traitement par déshydratation (5),
- la valeur de consigne $CM_{e0}$ de la charge massique en entrée du réacteur étant choisie de sorte que $1,1\ CM_{s0} \leq CM_{e0}$.

L'avantage principal de ce procédé par rapport à l'état de l'art est que le temps de séjour des matières en suspensions est compris entre 30 min et 100 min, voire entre 40 min et 60 min.

Dans le cadre de la présente description, on entend par « régime établi », le régime qui correspond, dans une unité de décantation, au fait que le décanteur est rempli et au fait que la quantité de boues admise par unité de temps en entrée du réacteur est légèrement supérieure à la quantité de boues évacuée par unité de temps en sortie du réacteur. Ceci se traduit par le fait que la charge massique $CM_{e0}$ en entrée du réacteur est choisie de sorte que $1,1\ CM_{s0} \leq CM_{e0}$, $CM_{s0}$ étant la charge massique en sortie du réacteur.

Des caractéristiques optionnelles de l'invention, complémentaires ou de substitution sont énoncées ci-après.

Le procédé peut comprendre en amont de l'étape de décantation et en aval de l'étape de traitement par boues activées, un passage dans une fosse de dégazage, et une étape de clarification dans un clarificateur, la fraction de boue à pré-épaissir lors de l'étape de décantation étant issue d'au moins l'une des étapes de traitement par boues activées, de dégazage, de clarification, ou de séparation physique membranaire.

Le procédé peut comprendre une étape de démarrage de l'alimentation du décanteur statique et une étape de de démarrage de l'alimentation de l'unité de déshydratation, le démarrage de l'alimentation de l'unité de déshydratation intervenant à l'issue d'une première temporisation T1 comprise entre 60 et 120 min, par rapport au démarrage de l'alimentation du décanteur statique.

Le démarrage de l'alimentation du décanteur statique peut s'effectuer suivant un débit de consigne $Q_{e0}$ suivant une durée T2 comprise entre 0 et 5 min, le débit étant déterminé à l'issue de ladite temporisation de sorte que $Q_e = CM_{e0} / C_e$.

Le démarrage de l'alimentation de l'unité de déshydratation peut s'effectuer suivant un débit de consigne $Q_{s0}$ pendant une troisième temporisation T3 comprise entre 0 et 20 min, le débit étant déterminé à l'issue de ladite temporisation de sorte que $Q_s = CM_{s0} / C_s$.

Le procédé peut comprendre une étape d'arrêt de l'alimentation du décanteur statique et une étape d'arrêt de l'alimentation de l'unité de déshydratation, l'arrêt de l'alimentation de l'unité de déshydratation intervenant à l'issue d'une quatrième temporisation T4 comprise entre 60 et 120 min, par rapport à l'arrêt de l'alimentation du décanteur statique.

L'étape d'arrêt de l'alimentation du décanteur statique et de l'unité de déshydratation peut être suivie d'une étape de vidange engagée à l'issue d'une cinquième temporisation T5 comprise entre 0 et 15 min, par rapport à l'arrêt de l'alimentation de l'unité de déshydratation, et durant une sixième temporisation T6 comprise entre 30 et 120 min.

L'étape de vidange du décanteur statique peut être suivie d'une étape de nettoyage du décanteur statique.

L'étape de décantation est accélérée au moyen d'un réactif, préférentiellement du CaCO3, de sorte que la première temporisation T1 est réduite à une valeur inférieure à 70 min.

L'invention a également pour objet une installation de traitement d'eaux usées comportant un bassin d'aération, relié à un décanteur statique rapide s'étendant verticalement suivant un axe en relation avec une unité de déshydratation, le décanteur statique rapide comprenant un réacteur, des moyens d'admission en entrée du réacteur, des moyens de régulation du débit volumique Qe en entrée du réacteur, des moyens d'extraction en sortie du réacteur, des moyen de régulation du débit volumique Qs en sortie du réacteur, les moyens d'admission en entrée du réacteur étant connectés au bassin d'aération, caractérisé en ce que la valeur de la hauteur H et la valeur de la section transversale S du réacteur sont encadrées respectivement comme suit:

$$7 \text{ m}^2 \leq S \leq 28 \text{ m}^2$$

et

$$2 \text{ m} \leq H \leq 5 \text{ m}.$$

Le fond du décanteur est dépourvu de tout moyen d'agitation.

Le fond du décanteur suit une inclinaison par rapport à un plan orthogonal à la direction verticale, comprise entre 0 et 5%. Le réacteur comprend en sa partie supérieure une rigole permettant d'évacuer la surverse. Le réacteur est équipé en sa partie supérieure d'un fût sans fond appelé« tranquillisateur » permettant l'admission des effluents sans perturber la décantation.

Des caractéristiques optionnelles de l'invention, complémentaires ou de substitution, sont énoncées ci-après.

Une fosse de dégazage et un clarificateur ou bien un séparateur physique de type membranaire sont interposés entre le bassin d'aération et le décanteur statique, les. moyens d'admission en entrée du réacteur étant connectés au bassin d'aération, à la fosse de dégazage et au clarificateur, de sorte que le décanteur peut être alimenté par au moins l'un des bassin d'aération, fosse de dégazage, clarificateur précités.

Les moyens d'admission et d'extraction de la boue respectivement en entrée et en sortie du réacteur peuvent comprendre respectivement un conduit d'arrivée débouchant dans le réacteur au niveau de sa partie supérieure, et un conduit d'évacuation débouchant dans le réacteur au niveau de sa partie inférieure, ainsi qu'une pompe à vitesse variable.

Les moyens de régulation du débit massique respectivement en entrée et en sortie du réacteur, peuvent comprendre chacun une sonde de mesure de la concentration de matières en suspensions dans la boue et un débitmètre, lesdits débitmètres et sondes étant reliés à un régulateur de la vitesse des pompes.

D'autres avantages et particularités de l'invention apparaîtront à la lecture de la description détaillée de mises en oeuvre et de modes de réalisation nullement limitatifs, et des dessins annexés suivants :

- la FIGURE 1 est une représentation schématique d'une installation de traitement des eaux usées,
- la FIGURE 2 est une représentation plus détaillée d'une telle installation
- la FIGURE 3 représente une courbe de décantation
- la FIGURE 4 est une représentation schématique d'un cycle de mise en oeuvre de l'invention.
- la FIGURE 5 est une courbe de résultat du processus de décantation selon l'invention.

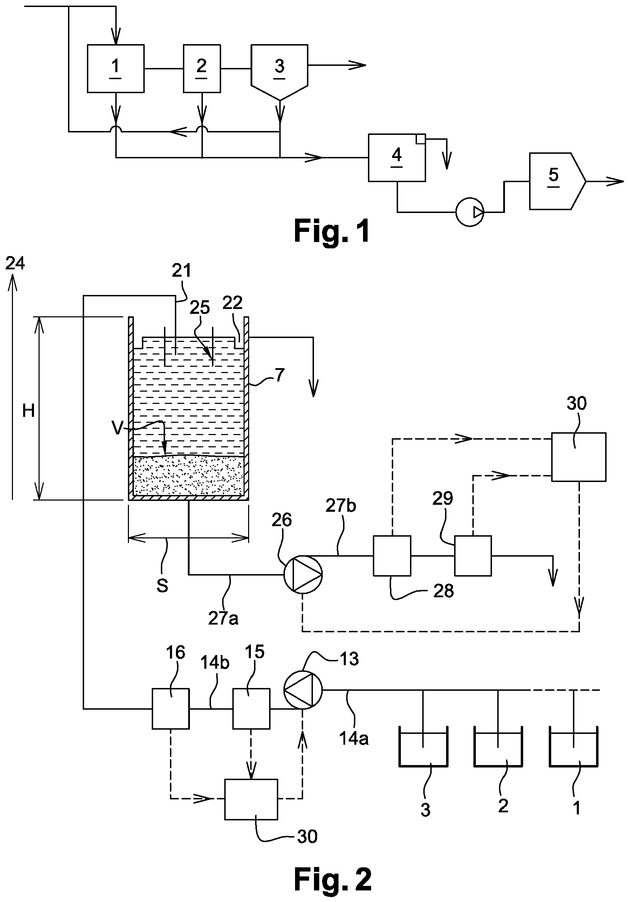

On a représenté en figure 1 une installation de traitement d'eaux usées comportant dans un bassin d'aération 1, lequel comporte, au voisinage de son fond, des moyens d'aération généralement constitués par des buses pour insuffler de l'air dans la liqueur du bassin. A l'opposé de l'arrivée de l'eau brute, l'eau est évacuée par gravité depuis le haut du bassin par une canalisation vers une fosse de dégazage 2. L'eau est évacuée de la fosse de dégazage 2 vers un clarificateur 3 dans lequel, les boues se rassemblent dans le fond. Les boues en excès sont ensuite extraites du fond du clarificateur. A la place d'un clarificateur, il est possible d'utiliser une unité de filtration membranaire.

Une partie des boues est recirculée et renvoyée dans le bassin d'aération. Une autre partie des boues en excès est évacuée vers un traitement de déshydratation dans une unité de déshydratation. Cette déshydratation peut être effectuée par centrifugation, filtre-presse, filtre à bandes, électro-déshydratation.... Elle permet d'évacuer une grande partie de l'eau constituant l'essentiel du volume des boues.

Avant le traitement par déshydratation, la partie des boues en excès transite dans un décanteur statique rapide 4. Tel que représenté sur la figure 1 et de manière plus générale le décanteur 4 peut être alimenté directement par le bassin d'aération 1, la fosse de dégazage 2 ou bien le clarificateur 3, ou bien plusieurs des unités mentionnées précédemment.

Le décanteur statique est un décanteur rapide qui permet d'obtenir des boues préépaissies en un temps suffisamment court pour éviter la dégradation de l'eau traitée, notamment en un temps inférieur à celui qui entraînerait un relargage du phosphore, ou de composés organiques volatils (acides gras volatils) par les bactéries, lesquels détérioreraient la qualité de l'eau traitée. Le décanteur rapide a pour fonction d'assurer un épaississement constant et élevé de la boue pour le traitement de déshydratation en aval.

Tel que représenté sur la figure 2, il comprend un réacteur 7 s'étendant verticalement suivant un axe 24. Des moyens d'admission sont prévus en entrée du réacteur et consistent principalement en une pompe 13 à vitesse variable qui débite sur une conduite de refoulement 14a, 14b (portions amont et aval de la pompe) débouchant en la partie supérieure du réacteur. La conduite est équipée d'une sonde 15 de mesure de la concentration Ce de matières en suspension. La sonde 15 est généralement du type optique. Un débitmètre 16, notamment de type électromagnétique, est également installé sur la conduite 14a, 14b (portions amont et aval de la pompe). Des moyens 30 de régulation du débit volumique Qe, et plus particulièrement aptes à piloter la pompe 13 sont également prévus en entrée du réacteur. On retrouve en sortie du réacteur des moyens 26, 27a, 27b pour extraire la boue du réacteur vers une unité de déshydratation 5. Ils consistent principalement en une pompe 26 à vitesse variable qui débite sur une conduite de refoulement 27a, 27b (portions amont et aval de la pompe) débouchant en la partie inférieure du réacteur. La conduite 27a, 27b est également équipée d'une sonde 29 de mesure de la concentration Cs de matières en suspension, ainsi que d'un débitmètre 28. Le débit volumique Qs en sortie du réacteur est régulé par des moyens aptes à piloter la pompe 26.

Le réacteur admet une section transversale S généralement comprise entre 7 et 28 m2. Ceci correspond, dans le cas où le réacteur est une cuve cylindrique, à une cuve de diamètre compris entre 3 et 6 m. Le réacteur admet de plus une hauteur H comprise entre 2 et 5 m, cette valeur permettant de préserver une vitesse ascensionnelle de 4 m/h.

Le réacteur est équipé en sa partie supérieure d'un fût sans fond appelé « tranquillisateur » 25 permettant l'admission des effluents sans perturber la décantation.

Il est avantageux de dimensionner le tranquillisateur 25 (diamètre et hauteur) de sorte que la vitesse des effluents circulant en son sein n'excède pas 90 m/h.

De même, il est avantageux de choisir le diamètre de la conduite 21 d'arrivée de sorte que la vitesse des effluents n'excède pas 1,5 m/s.

De même, le diamètre de la conduite de la surverse 22 sera choisi de sorte que la vitesse des effluents n'excède pas 1,05 m/s. De plus, la lame déversante de la surverse 22 présente avantageusement un ratio maximal inférieur à 15 $m^3$/h.

De même, les moyens d'extraction de boue (pompe 26 et conduite 27a, 27b) seront choisis de sorte que la vitesse des effluents n'excède pas 0,8 m/s en amont de la pompe et 1,3 m/s en aval de la pompe.

Le fond du décanteur est dépourvu de tout moyen d'agitation. Le fait que la décantation s'effectue d'elle-même dans le réacteur et sans avoir recours à des moyens tels que ceux décrits dans la demande WO2010/073222 (le racleur référencé 10), constitue un avantage certain en terme de coût et de simplicité d'utilisation.

Le réacteur admet un fond plat. Cette configuration permet en effet de réduire de 40% le coût de fabrication du réacteur.

Le fond du décanteur suit une inclinaison par rapport à un plan orthogonal à la direction verticale 24, ladite inclinaison restant inférieure à 5%. De cette façon, les opérations de vidange et de nettoyage de la cuve sont facilitées.

Le réacteur comprend en sa partie supérieure une rigole 22 permettant d'évacuer la surverse.

Le procédé de mise en oeuvre d'une installation telle que celle décrite précédemment va maintenant être décrite. La mise en oeuvre de l'installation s'effectue sous la forme d'un cycle comportant les étapes successives qui sont détaillées ci-après. Par souci de clarté, l'ensemble des paramètres du cycle sont listés dans le tableau 1 ci-dessous :

Tableau 1

| Paramètres | Abréviations | Mode d'acquisition | Plage de valeurs | Unités |
|---|---|---|---|---|
| Concentration des boues activées en entrée du décanteur | $C_e$ | Sonde 15 | 1,5-8 | gMES/L |
| Concentration boues épaissies en sortie du décanteur | $C_s$ | Sonde 28 | 5-15 | gMES/L |
| Charge massique en entrée du décanteur | $CM_{e0}$ | consigne | 50-80 | kgMES/h |
| Charge massique en sortie du décanteur | $CM_{s0}$ | consigne | 50-80 | kgMES/h |
| Débit d'alimentation de consigne en entrée du décanteur | $Q_{e0}$ | consigne | 10-40 | m3/h |
| Débit d'alimentation en entrée du décanteur | $Q_e$ | Calculé (+ contrôle débitmètre 16) | 10-40 | m3/h |

(suite)

| Paramètres | Abréviations | Mode d'acquisition | Plage de valeurs | Unités |
|---|---|---|---|---|
| Débit d'alimentation de consigne en sortie du décanteur | $Q_{s0}$ | consigne | 5-12 | m3/h |
| Débit d'alimentation en sortie du décanteur | $Q_s$ | Calculé (+ contrôle débitmètre 29) | 5-12 | m3/h |
| Première temporisation (entre le démarrage du décanteur et le démarrage de l'unité de déshydratation) | T1 | consigne | 60-120 | Minutes |
| Deuxième temporisation (pour le débit de consigne au démarrage du décanteur) | T2 | consigne | 0-5 | Minutes |
| Troisième temporisation (pour le débit de consigne au démarrage de l'unité de déshydratation) | T3 | consigne | 0-20 | Minutes |
| Quatrième temporisation (entre l'arrêt du décanteur et l'arrêt de l'unité de déshydratation) | T4 | consigne | 60-120 | Minutes |
| Cinquième temporisation (entre l'arrêt de l'unité de déshydratation et la vidange) | T5 | consigne | 0-15 | Minutes |
| Sixième temporisation (durée de l'étape de vidange) | T6 | consigne | 30-120 | Minutes |
| Septième temporisation (durée de l'étape de nettoyage) | T7 | consigne | 0-60 | Minutes |

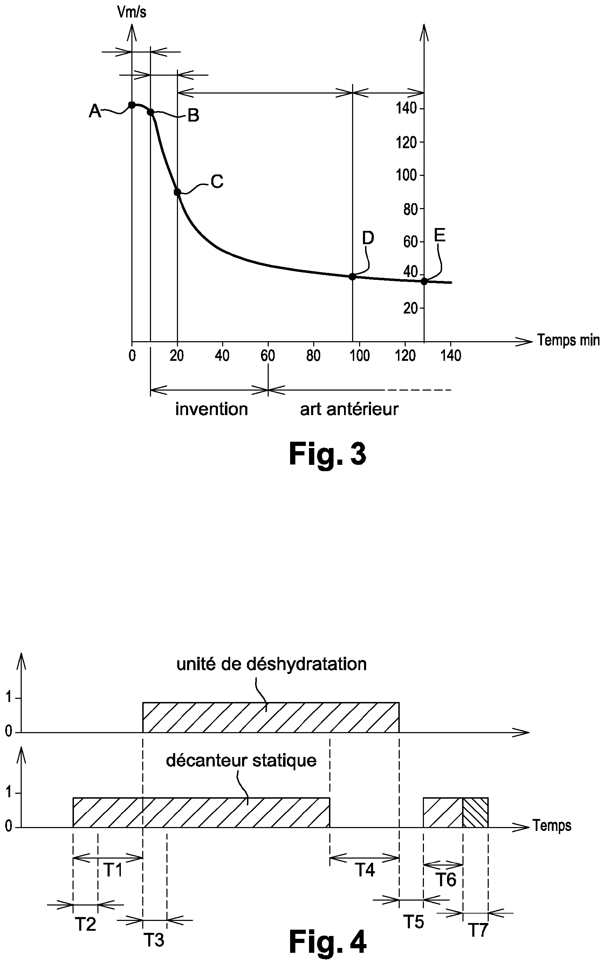

Tel que résumé en figure 4, le cycle comprend une étape de démarrage de l'alimentation du décanteur statique et une étape de démarrage de l'alimentation de l'unité de déshydratation. Le démarrage de l'alimentation de l'unité de déshydratation intervient à l'issue d'une première temporisation T1 comprise entre 60 et 120 min, par rapport au démarrage de l'alimentation du décanteur statique.

Dans un premier temps, on démarre l'alimentation du décanteur statique en appliquant un débit de consigne $Q_{e0}$ prédéfini suivant une seconde temporisation T2 comprise entre 0 et 5 min. A l'issue de cette temporisation T2, le débit $Q_e$ est ajusté en fonction de l'équation suivante : $Q_e = CM_{e0}/C_e$. Pendant la temporisation T1, le réacteur commence par se remplir. Au fur et à mesure, une partie de la boue commence à décanter initiant alors la montée du voile de boue V.

La valeur de la concentration $C_e$ est mesurée par la sonde 15, la valeur $CM_{e0}$ est définie comme une valeur de consigne. Les moyens de régulation 30 du débit volumique calculent alors le débit $Q_e$ et pilotent la pompe 13.

On définit $CM_{e0}$ comme étant la valeur de la charge massique en entrée du décanteur. C'est une valeur de consigne déterminée de sorte que $1{,}1\ CM_{s0} \le CM_{e0}$, $CM_{s0}$ étant la charge massique en sortie du décanteur et correspondant à la charge massique nominale $CM_{5nom}$ propre à l'unité de traitement par déshydratation 5.

En d'autres termes, pour une charge massique nominale propre à une unité de déshydratation donnée, ladite charge massique nominale correspondant à une capacité de traitement spécifique des boues par l'unité de déshydratation, on détermine la charge massique admissible en entrée du décanteur, de sorte qu'elle soit légèrement supérieure à la charge massique nominale.

En d'autres termes encore, le régime établi est atteint lorsque le décanteur est rempli et que la quantité de boues admise par unité de temps est au moins égale sinon supérieure à la quantité de boues extraite par unité de temps, avec des débits en entrée et en sortie tels que la boue peut décanter. Pour limiter le temps de séjour de boue décantée, on ajuste les débits volumiques en entrée et en sortie pour admettre au moins autant de matière en suspension dans le décanteur par rapport à celle admise et traitée dans l'unité de déshydratation.

A l'issue de la première temporisation T1, le démarrage de l'alimentation de l'unité de déshydratation est initié.

L'unité de déshydratation est alimentée préférentiellement suivant un débit de consigne $Q_{s0}$ pendant une troisième temporisation T3 comprise entre 0 et 20 min. A l'issue de cette temporisation, le débit est déterminé en fonction de l'équation suivante : $Q_s = CM_{s0}/C_s$. Comme précisé précédemment, $CM_{s0}$ est la charge massique en sortie du décanteur et correspondant à la charge massique nominale propre à l'unité de traitement par déshydratation 5. Généralement, on choisit le type et la capacité de l'unité de déshydratation en fonction du volume de boue à traiter, ce volume étant fonction du volume d'eaux usées produit.

La valeur de la concentration $C_s$ est mesurée par la sonde 27, la valeur $CM_{s0}$ étant définie comme la charge massique nominale de l'installation de déshydratation 5. Les moyens de régulation 30 du débit volumique calculent alors le débit $Q_s$ et pilotent la pompe 26.

Lorsque l'unité de déshydratation et le décanteur fonctionnent selon la régulation en continu des débits, telle que $Q_e = CM_{e0} / C_e$ et $Q_s = CM_{s0} / C_s$, on est alors en régime établi.

Il n'est pas nécessaire qu'un opérateur intervienne, puisque le couple formé par l'unité de déshydratation et le décanteur ajustent d'eux même leur fonctionnement.

L'arrêt de l'installation comprend une étape d'arrêt de l'alimentation du décanteur statique et une étape d'arrêt de l'alimentation de l'unité de déshydratation.

L'arrêt de l'alimentation de l'unité de déshydratation intervient à l'issue d'une quatrième temporisation T4 comprise entre 60 et 120 min, par rapport à l'arrêt de l'alimentation du décanteur statique.

De manière avantageuse, l'arrêt de l'alimentation du décanteur statique et de l'unité de déshydratation est suivi d'une étape de vidange engagée à l'issue d'une cinquième temporisation T5 comprise entre 0 et 15 min, par rapport à l'arrêt de l'alimentation de l'unité de déshydratation. Cette vidange se déroule suivant une sixième temporisation T6 comprise entre 30 et 120 min.

De manière avantageuse, la vidange du décanteur statique est suivie d'une étape de nettoyage du décanteur statique suivant une septième temporisation T7 comprise entre 0 et 60 min.

De manière avantageuse, l'étape de décantation est accélérée au moyen d'un réactif, préférentiellement du CaCO3, de sorte que la première temporisation T1 est réduite à une valeur inférieure à 70 min. Ce réactif introduit dans des proportions de l'ordre de 10 à 30% des matières sèches permet d'augmenter de l'ordre de 2 gMES/L la concentration de la boue épaissie et également de faciliter la déshydratation et d'élever le taux de siccité.

Comme le montre le tableau 2, ce cycle a pour principal avantage de permettre la décantation, selon un fonctionnement en continu, d'effluents, suivant un temps de séjour et des concentrations en entrée et en sortie très faibles par rapport à l'existant.

Tableau 2

| | Décanteur statique art antérieur | Décanteur WO2010/073222 | Décanteur invention | Unité |
|---|---|---|---|---|
| Vitesse de décantation | 0,3 | 4 | 4 | m/h |
| Charge au radier | 1 | 9-20 | 9-12 | kgMS/m$^2$.h |
| Diamètre du décanteur | 6-20 | 6-15 | 3-6 | m |
| Temps de séjour des boues | 24-48 | 2 | 0,4-1 | h |
| Inclinaison du fond | Pente à 20% | Pente à 20% | Pente < 5% | / |
| Moyens d'agitation | OUI | OUI | NON | / |
| $C_e$ | 4-8 | 2-6 | 2-6 | gMES/L |
| $C_s$ | 20 | 10-15 | 6-12 | gMES/L |
| Nécessité d'un agent d'épaississement | NON | OUI | NON | / |

Comme le montre le tableau 2, l'étape de décantation selon l'invention s'est affranchit d'une part des moyens d'agitation (herse, racleur) et d'autre part des agents épaississants.

Il est à noter que l'étape de décantation selon l'invention est liée au gabarit du décanteur. En effet, compte tenu de la faible concentration en entrée (2,0 à 3,0 gMES/L contre 4,0 à 6,0 gMES/L pour l'art antérieur), et en sortie (6-12 gMES/L environ contre 20-40 gMES/L pour l'art antérieur), et compte tenu du faible temps de séjour imposé, le réacteur 7 est dimensionné de sorte que la charge au radier est comprise entre 9 et 12 kgMS/m$^2$.h. Sachant que la charge au radier se définit comme étant le quotient du produit entre le débit et la concentration par la section du réacteur, on obtient :

$$9 < Q.C/S < 12$$

Afin de respecter un temps de séjour de 30 à 100 minutes ainsi que des vitesses de décantation aux alentours de 4 m/h pour les matières en suspensions, et en se basant sur la valeur $CM_{s0}$ de la charge massique en sortie du décanteur, on obtient que la section doit être comprise entre 7 et 28 m$^2$, ce qui correspond à un diamètre compris entre 3 et 6 m.

De même, en se basant sur ces mêmes paramètres, on obtient un encadrement de la valeur de la hauteur du réacteur compris entre 2 et Sm, et encore plus préférentiellement entre 3 et 4m.

En se reportant à la figure 3, on voit que l'invention se situe dans la partie gauche de la courbe de Kynch, par rapport l'art antérieur qui occupe à contrario la partie droite de la courbe de Kynch.

On définit habituellement les courbes de Kynch comme suit :

- la zone AB correspond à une phase de coalescence du floc de très courte durée (voire inexistante) et où l'interface eau /boue est plus ou moins nette,
- la zone BC correspond à une phase au cours de laquelle la vitesse chute de manière constante et est seulement fonction de la concentration initiale de boue,
- la zone CD correspond à une phase de décantation statique, à partir du point C de la courbe, dite « entravée ou freinée ». Les vitesses de sédimentation de l'interface fléchissent, marquant une zone pour laquelle la vitesse de décantation d'une couche ou strate dans la suspension est uniquement fonction de sa concentration locale
- La zone DE est une zone de compression ou de consolidation où les vitesses de sédimentation tendent vers zéro.

Lors des tests de décantation, les boues en excès passent par différentes phases et différents niveaux de concentration en fond d'éprouvette. La problématique étant posée, l'invention a pour objet de déterminer dans quelles conditions la phase préalable à l'épaississement peut être maîtrisée en lien avec le fonctionnement dynamique de la ligne de déshydratation des boues. Ces courbes de Kynch permettent également de définir les paramètres qui permettent de dimensionner l'unité de déshydratation et le décanteur nécessaire.

Ainsi, le procédé de traitement des eaux usées cherche à optimiser les conditions de décantation en ajustant en continu les débits en entrée et en sortie du réacteur de manière à minimiser le temps de séjour des boues. De ce fait on obtient un temps de séjour compris entre 30 et 100 minutes, et plus précisément de l'ordre de 60 minutes contre un temps de séjour habituellement de l'ordre de 120 minutes.

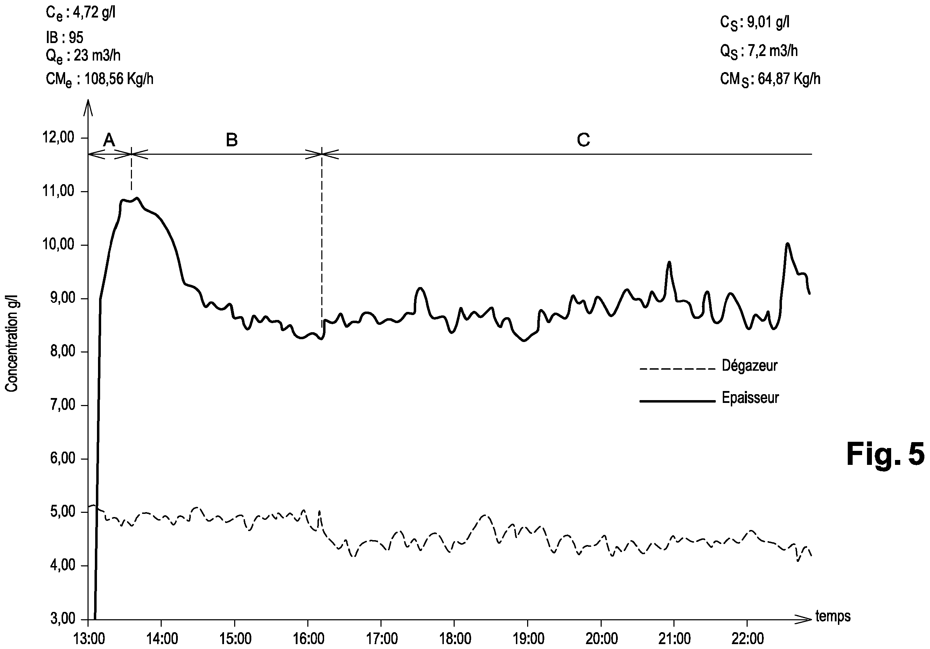

La figure 5 représente la variation de la concentration en g/L de matière en suspension dans le réacteur en fonction du temps. La partie A correspond au remplissage du réacteur et à la montée du voile de boue. La partie B correspond à la mise en route de l'unité de déshydratation qui, du fait de son activité, fait descendre le voile de boue. Ce dernier se stabilise globalement lorsque le régime établi est atteint pendant toute la durée où le couple décanteur rapide / unité de déshydratation fonctionnent conjointement suivant l'équilibre du régime établi.

De cette façon, l'invention propose un procédé de traitement mettant en oeuvre une étape de décantation rapide qui permet de s'affranchir de l'utilisation des polymères. L'invention met également en oeuvre un réacteur de décantation simplifié (et donc moins cher) et peu encombrant puisqu'il comporte une empreinte au sol réduite.

Bien sûr, l'invention n'est pas limitée aux exemples qui viennent d'être décrits et de nombreux aménagements peuvent être apportés à ces exemples sans sortir du cadre des revendications.

**Revendications**

1. Procédé de traitement d'eaux usées comportant en amont au moins une étape de traitement par boues activées dans un bassin d'aération (1), et en aval au moins une étape de décantation dans un décanteur statique rapide (4) sans avoir recours à un polymère, la décantation permettant de pré-épaissir une fraction de boue issue directement ou indirectement de l'étape de traitement par boues activées, avant son extraction en direction d'une unité de traitement par déshydratation (5), le décanteur statique rapide comprenant :

    - un réacteur (7),
    - des moyens (14a, 14b) d'admission de la fraction de boue en entrée du réacteur,
    - des moyens (15, 16, 30) de régulation du débit volumique $Q_e$ en entrée du réacteur,
    - des moyens (27a, 27b) d'extraction de la fraction de boue en sortie du réacteur,
    - des moyen (28, 29, 30) de régulation du débit volumique $Q_s$ en sortie du réacteur,
    - la valeur de la hauteur H et la valeur de la section transversale S du réacteur étant encadrées respectivement comme suit :

$$7 \ m^2 \leq S \leq 28 \ m^2$$

et

$$2\,\mathrm{m} \leq \mathrm{H} \leq 5\,\mathrm{m}.$$

- le fond du décanteur étant dépourvu de tout moyen d'agitation,
- le fond du décanteur suivant une inclinaison par rapport à un plan orthogonal à la direction verticale (24), comprise entre 0 et 5%,
- le réacteur comprenant en sa partie supérieure une rigole (22) permettant d'évacuer la surverse,
- le réacteur étant équipé en sa partie supérieure d'un fût sans fond appelé « tranquillisateur » 25 permettant l'admission des effluents sans perturber la décantation.

**caractérisé en ce que** dans l'étape de décantation, en régime établi :

- la valeur du débit volumique $Q_s$ de la fraction de boue en sortie du réacteur dépend :

  • d'une valeur de consigne $CM_{s0}$ de la charge massique en sortie du réacteur,
  • et de la concentration $C_s$ de matières en suspensions dans la boue mesurée en sortie du réacteur, de sorte que : $Q_s = CM_{s0} / C_s$.

- la valeur du débit volumique $Q_e$ de la fraction de boue en entrée du réacteur dépend :

  • d'une valeur de consigne $CM_{e0}$ de la charge massique en entrée du réacteur,
  • et de la concentration Ce de matières en suspensions dans la boue mesurée en entrée du réacteur, de sorte que : $Q_e = CM_{e0} / C_e$,

avec :

  - la valeur de consigne $CM_{s0}$ de la charge massique en sortie du réacteur étant la charge massique nominale $CM_{5nom}$ propre à l'unité de traitement par déshydratation (5),
  - la valeur de consigne $CM_{e0}$ de la charge massique en entrée du réacteur étant telle que : $1,1\,CM_{s0} \leq CM_{e0}$.

**2.** Procédé de traitement d'eaux usées selon la revendication 1, **caractérisé en ce qu'**il comprend en amont de l'étape de décantation et en aval de l'étape de traitement par boues activées, un passage dans une fosse de dégazage (2), et une étape de clarification dans un clarificateur (3), la fraction de boue à épaissir lors de l'étape de décantation étant issue d'au moins l'une des étapes de traitement par boues activées, de dégazage, de clarification, ou de séparateur physique de type membranaire.

**3.** Procédé de traitement d'eaux usées selon l'une quelconque des revendications précédentes, **caractérisé en ce qu'**il comprend une étape de démarrage de l'alimentation du décanteur statique (4) et une étape de de démarrage de l'alimentation de l'unité de déshydratation (5), le démarrage de l'alimentation de l'unité de déshydratation intervenant à l'issue d'une première temporisation T1 comprise entre 60 et 200 min, par rapport au démarrage de l'alimentation du décanteur statique.

**4.** Procédé de traitement d'eaux usées selon la revendication 3, **caractérisé en ce que** le démarrage de l'alimentation du décanteur statique s'effectue suivant un débit de consigne $Q_{e0}$ suivant une durée T2 comprise entre 0 et 5 min, le débit étant déterminé à l'issue de ladite temporisation de sorte que $Q_e = CM_{e0} / C_e$,.

**5.** Procédé de traitement d'eaux usées selon l'une quelconque des revendications 3 ou 4, **caractérisé en ce que** le démarrage de l'alimentation de l'unité de déshydratation s'effectue suivant un débit de consigne $Q_{s0}$ pendant une troisième temporisation T3 comprise entre 0 et 20 min, le débit étant déterminé à l'issue de ladite temporisation de sorte que $Q_s = CM_{s0} / C_s$,.

**6.** Procédé de traitement d'eaux usées selon l'une quelconque des revendications précédentes, **caractérisé en ce qu'**il comprend une étape d'arrêt de l'alimentation du décanteur statique (4) et une étape d'arrêt de l'alimentation de l'unité de déshydratation (5), l'arrêt de l'alimentation de l'unité de déshydratation intervenant à l'issue d'une quatrième temporisation T4 comprise entre 60 et 120 min, par rapport à l'arrêt de l'alimentation du décanteur statique.

**7.** Procédé de traitement d'eaux usées selon la revendication 6, **caractérisé en ce que** l'étape d'arrêt de l'alimentation du décanteur statique et de l'unité de déshydratation est suivie d'une étape de vidange, préférentiellement engagée à l'issue d'une cinquième temporisation T5 comprise entre 0 et 15 min par rapport à l'arrêt de l'alimentation de l'unité de déshydratation, ladite vidange durant une sixième temporisation T6 comprise entre 30 et 120 min.

8. Procédé de traitement d'eaux usées selon la revendication 7, **caractérisé en ce que** l'étape de vidange du décanteur statique est suivie d'une étape de nettoyage du décanteur statique durant une septième temporisation T7 comprise entre 0 et 60 min.

9. Procédé de traitement d'eaux usées selon l'une quelconque des revendications précédentes, **caractérisé en ce que** l'étape de décantation est accélérée au moyen d'un réactif, préférentiellement du CaCO3, de sorte que la première temporisation T1 est réduite à une valeur inférieure à 70 min.

10. Installation de traitement d'eaux usées comportant :

- un bassin d'aération (1),
- un décanteur statique rapide (4) s'étendant verticalement suivant un axe (24) et en relation avec une unité de déshydratation (5), le décanteur statique rapide comprenant :

• un réacteur (7),
• des moyens (14a, 14b) d'admission en entrée du réacteur, les moyens (14a, 14b) d'admission en entrée du réacteur étant connectés au bassin d'aération (1),
• des moyens (15, 16, 30) de régulation du débit volumique ($Q_e$) en entrée du réacteur,
• des moyens (27a, 27b) d'extraction en sortie du réacteur,
• des moyens (28, 29, 30) de régulation du débit volumique ($Q_s$) en sortie du réacteur,

**caractérisée en ce que** :

- la valeur de la hauteur H et la valeur de la section transversale S du réacteur sont encadrées respectivement comme suit :

$$7 \text{ m}^2 \leq S \leq 28 \text{ m}^2$$

et

$$2 \text{ m} \leq H \leq 5 \text{ m}.$$

- le fond du décanteur est dépourvu de tout moyen d'agitation,
- le fond du décanteur suit une inclinaison par rapport à un plan orthogonal à la direction verticale (24), comprise entre 0 et 5%,
- le réacteur comprend en sa partie supérieure une rigole (22) permettant d'évacuer la surverse,
- le réacteur est équipé en sa partie supérieure d'un fût sans fond appelé « tranquillisateur » 25 permettant l'admission des effluents sans perturber la décantation.

11. Installation de traitement d'eaux selon la revendication 10, **caractérisée** en qu'une fosse de dégazage (2), et un clarificateur (3) ou un séparateur physique de type membranaire, sont interposés entre le bassin d'aération et le décanteur statique, les moyens d'admission en entrée du réacteur étant connectés au bassin d'aération, à la fosse de dégazage et au clarificateur, de sorte que le décanteur peut être alimenté par au moins l'un des bassin d'aération, fosse de dégazage, clarificateur précités,

12. Installation de traitement d'eaux selon l'une quelconque des revendications 10 à 11 **caractérisé en ce que** les moyens d'admission et d'extraction de la boue respectivement en entrée et en sortie du réacteur comprennent respectivement un conduit d'arrivée (14b) débouchant dans le réacteur au niveau de sa partie supérieure, et un conduit d'évacuation (27a) débouchant dans le réacteur au niveau de sa partie inférieure, ainsi qu'une pompe à vitesse variable (13, 26).

13. Installation de traitement d'eaux selon l'une quelconque des revendications 10 à 12 **caractérisé en ce que** les moyens de régulation du débit massique respectivement en entrée et en sortie du réacteur, comprennent chacun une sonde (15, 28) de mesure de la concentration de matières en suspensions dans la boue et un débitmètre (16, 29), lesdits débitmètres et sondes étant reliés à un régulateur (30) de la vitesse des pompes.

**Patentansprüche**

1. Verfahren zur Behandlung von Abwasser, aufweisend vorher einen Schritt der Behandlung durch aktivierte Schlämme in einem Belüftungsbecken (1) und nachher einen Schritt der Dekantierung in einem schnellen statischen Dekanter (4) ohne Rückgriff auf ein Polymer, wobei die Dekantierung gestattet, eine Schlammfraktion, die unmittelbar oder mittelbar dem Schritt der Behandlung durch aktivierte Schlämme entstammt, vor ihrem Abzug in Richtung einer Einheit zur Behandlung durch Dehydrierung (5) vorzuverdicken, wobei der schnelle statische Dekanter Folgendes umfasst:

 - einen Reaktor (7),
 - Mittel (14a, 14b) zum Ansaugen der Schlammfraktion am Eingang des Reaktors,
 - Mittel (15, 16, 30) zum Regeln des Volumenstroms $Q_e$ am Eingang des Reaktors,
 - Mittel (27a, 27b) zum Abziehen der Schlammfraktion am Ausgang des Reaktors,
 - Mittel (28, 29, 30) zum Regeln des Volumenstroms $Q_s$ am Ausgang des Reaktors,
 - wobei der Wert der Höhe H und der Wert des Querschnitts S des Reaktors jeweils folgendermaßen eingeschränkt sind:

$$7 \ m^2 \ \leq \ S \ \leq \ 28 \ m^2$$

und

$$2 \ m \ \leq \ H \ \leq \ 5 \ m,$$

 - wobei der Boden des Dekanters frei von irgendeinem Rührmittel ist,
 - wobei der Boden des Dekanters einer Neigung gegenüber einer zu der vertikalen Richtung (24) orthogonalen Ebene folgt, die zwischen 0 und 5 % beträgt,
 - wobei der Reaktor in seinem oberen Teil eine Rinne (22) umfasst, die die Ableitung des überlaufenden Wassers gestattet,
 - wobei der Reaktor in seinem oberen Teil mit einem Schaft ohne Boden, als "Transquilizer" 25 bezeichnet, versehen ist, der das Ansaugen der Abwässer gestattet, ohne die Dekantierung zu stören,
 **dadurch gekennzeichnet, dass** in dem Schritt der Dekantierung, im stationären Zustand:

  - der Wert des Volumenstroms $Q_s$ der Schlammfraktion am Ausgang des Reaktors abhängig ist:

   • von einem Sollwert $CM_{s0}$ der Schlammbelastung am Ausgang des Reaktors,
   • und von der Konzentration $C_s$ an Schwebstoffen im Schlamm, gemessen am Ausgang des Reaktors, so dass: $Q_s = CM_{s0} / C_s$.

  - der Wert des Volumenstroms $Q_e$ der Schlammfraktion am Eingang des Reaktors abhängig ist:

   • von einem Sollwert $CM_{e0}$ der Schlammbelastung am Eingang des Reaktors,
   • und von der Konzentration $C_e$ an Schwebstoffen im Schlamm, gemessen am Eingang des Reaktors, so dass: $Q_e = CM_{e0} / C_e$,

  wobei:

  - der Sollwert $CM_{s0}$ der Schlammbelastung am Ausgang des Reaktors die nominale Schlammbelastung $CM_{5nom}$ ist, die der Einheit zur Behandlung durch Dehydrierung (5) eigen ist,
  - der Sollwert $CM_{e0}$ der Schlammbelastung am Eingang des Reaktors dergestalt ist, dass: $1{,}1 \ CM_{s0} \leq CM_{e0}$.

2. Verfahren zur Behandlung von Abwasser nach Anspruch 1, **dadurch gekennzeichnet, dass** es vor dem Schritt der Dekantierung und nach dem Schritt der Behandlung durch aktivierte Schlämme ein Durchlaufen einer Entgasungsgrube (2) und einen Schritt der Klärung in einem Klärbecken (3) umfasst, wobei die im Schritt der Dekantierung zu verdickende Schlammfraktion wenigstens einem der Schritte der Behandlung durch aktivierte Schlämme, der Entgasung, der Klärung oder einer physikalischen Membrantrennvorrichtung entstammt.

3. Verfahren zur Behandlung von Abwasser nach einem der vorhergehenden Ansprüche, **dadurch gekennzeichnet, dass** es einen Schritt des Startens der Versorgung des statischen Dekanters (4) und einen Schritt des Startens der Versorgung der Dehydrierungseinheit (5) umfasst, wobei das Starten der Versorgung der Dehydrierungseinheit am Ende einer ersten Zeitverzögerung T1 zwischen 60 und 200 min gegenüber dem Starten der Versorgung des statischen Dekanters stattfindet.

4. Verfahren zur Behandlung von Abwasser nach Anspruch 3, **dadurch gekennzeichnet, dass** das Starten der Versorgung des statischen Dekanters gemäß einem Solldurchflusstrom $Q_{e0}$ gemäß einer Dauer T2 zwischen 0 und 5 min erfolgt, wobei der Durchflusstrom am Ende der Zeitverzögerung bestimmt wird, so dass $Q_e = Cm_{e0}/C_e$, .

5. Verfahren zur Behandlung von Abwasser nach einem der Ansprüche 3 oder 4, **dadurch gekennzeichnet, dass** das Starten der Versorgung der Dehydrierungseinheit gemäß einem Solldurchflusstrom $Q_{s0}$ während einer dritten Zeitverzögerung T3 zwischen 0 und 20 min erfolgt, wobei der Durchflusstrom am Ende der Zeitverzögerung bestimmt wird, so dass $Q_s = CM_{s0}/C_s$, .

6. Verfahren zur Behandlung von Abwasser nach einem der vorhergehenden Ansprüche, **dadurch gekennzeichnet, dass** es einen Schritt des Stoppens der Versorgung des statischen Dekanters (4) und einen Schritt des Stoppens der Versorgung der Dehydrierungseinheit (5) umfasst, wobei das Stoppen der Versorgung der Dehydrierungseinheit am Ende einer vierten Zeitverzögerung T4 zwischen 60 und 120 min gegenüber dem Stoppen der Versorgung des statischen Dekanters stattfindet.

7. Verfahren zur Behandlung von Abwasser nach Anspruch 6, **dadurch gekennzeichnet, dass** dem Schritt des Stoppens der Versorgung des statischen Dekanters und der Dehydrierungseinheit ein Schritt der Entleerung folgt, der vorzugsweise am Ende einer fünften Zeitverzögerung T5 zwischen 0 und 15 min gegenüber dem Stoppen der Versorgung der Dehydrierungseinheit begonnen wird, wobei die Entleerung während einer sechsten Zeitverzögerung T6 zwischen 30 und 120 min erfolgt.

8. Verfahren zur Behandlung von Abwasser nach Anspruch 7, **dadurch gekennzeichnet, dass** dem Schritt der Entleerung des statischen Dekanters ein Schritt der Reinigung des statischen Dekanters während einer siebten Zeitverzögerung T7 zwischen 0 und 60 min folgt.

9. Verfahren zur Behandlung von Abwasser nach einem der vorhergehenden Ansprüche, **dadurch gekennzeichnet, dass** der Schritt der Dekantierung mittels eines Reagens, vorzugsweise CaC03, beschleunigt wird, so dass die erste Zeitverzögerung T1 auf einen Wert reduziert wird, der niedriger ist als 70 min.

10. Anlage zur Behandlung von Abwasser, aufweisend:

- ein Belüftungsbecken (1),
- einen schnellen statischen Dekanter (4), der sich in vertikaler Richtung gemäß einer Achse (24) und in Verbindung mit einer Dehydrierungseinheit (5) erstreckt, wobei der schnelle statische Dekanter Folgendes umfasst:

• einen Reaktor (7),
• Mittel (14a, 14b) zum Ansaugen am Eingang des Reaktors, wobei die Mittel (14a, 14b) zum Ansaugen am Eingang des Reaktors mit dem Belüftungsbecken (1) verbunden sind,
• Mittel (15, 16, 30) zum Regeln des Volumenstroms ($Q_e$) am Eingang des Reaktors,
• Mittel (27a, 27b) zum Abziehen am Ausgang des Reaktors,
• Mittel (28, 29, 30) zum Regeln des Volumenstroms ($Q_s$) am Ausgang des Reaktors,

**dadurch gekennzeichnet, dass**:

- der Wert der Höhe H und der Wert des Querschnitts S des Reaktors jeweils folgendermaßen eingeschränkt sind:

$$7 \ m^2 \leq S \leq 28 \ m^2$$

und

$$2 \ m \leq H \leq 5 \ m,$$

- der Boden des Dekanters frei von irgendeinem Rührmittel ist,
- der Boden des Dekanters einer Neigung gegenüber einer zu der vertikalen Richtung (24) orthogonalen Ebene folgt, die zwischen 0 und 5 % beträgt,
- der Reaktor in seinem oberen Teil eine Rinne (22) umfasst, die die Ableitung des überlaufenden Wassers gestattet,
- der Reaktor in seinem oberen Teil mit einem Schaft ohne Boden, als "Transquilizer" 25 bezeichnet, versehen ist, der das Ansaugen der Abwässer gestattet, ohne die Dekantierung zu stören,

11. Anlage zur Behandlung von Wasser nach Anspruch 10, **dadurch gekennzeichnet, dass** eine Entgasungsgrube (2) und ein Klärbecken (3) oder eine physikalische Membrantrennvorrichtung zwischen dem Belüftungsbecken und dem statischen Dekanter angeordnet sind, wobei die Mittel zum Ansaugen am Eingang des Reaktors mit dem Belüftungsbecken, mit der Entgasungsgrube und mit dem Klärbecken verbunden sind, so dass der Dekanter durch wenigstens einen der oben erwähnten, dem Belüftungsbecken, der Entgasungsgrube, dem Klärbecken, versorgt wird.

12. Anlage zur Behandlung von Wasser nach einem der Ansprüche 10 bis 11, **dadurch gekennzeichnet, dass** die Mittel zum Ansaugen und zum Abziehen des Schlamms am Eingang bzw am Ausgang des Reaktors eine Zuleitung (14b), die in dem Reaktor im Bereich seines oberen Teils ausmündet, bzw eine Ableitung (27a), die in dem Reaktor im Bereich seines unteren Teils ausmündet, sowie eine Pumpe mit variabler Geschwindigkeit (13, 26) umfassen.

13. Anlage zur Behandlung von Wasser nach einem der Ansprüche 10 bis 12, **dadurch gekennzeichnet, dass** die Mittel zum Regeln des Volumenstroms am Eingang bzw am Ausgang des Reaktors jedes eine Sonde (15, 28) zum Messen der Konzentration an Schwebstoffen in dem Schlamm und einen Durchflussmesser (16, 29) umfassen, wobei die Durchflussmesser und Sonden mit einem Regler (30) der Geschwindigkeit der Pumpen verbunden sind.

**Claims**

1. Wastewater treatment method comprising at least one activated sludge treatment step upstream in an aeration tank (1) and at least one settling step downstream in a rapid static decanter (4) without the use of a polymer, the settling being used to pre-thicken a fraction of sludge resulting directly or indirectly from the activated sludge treatment step, before its extraction in the direction of a dewatering treatment unit (5), the rapid static decanter comprising:

- a reactor (7),
- means (14a, 14b) for inlet the sludge fraction at the reactor inlet,
- means (15, 16, 30) for regulating the volume flow $Q_e$ at the reactor inlet,
- means (27a, 27b) for extracting the fraction of sludge at the reactor outlet,
- means (28, 29, 30) for regulating the volume flow $Q_s$ at the reactor outlet,
- the value of the height H and the value of the cross-sectional area S of the reactor are respectively framed as follows:

$$7 \ m2 \leq S \leq 28 \ m2$$

and

$$2 \ m \leq H \leq 5 \ m.$$

- the bottom of the decanter being devoid of any means of agitation,

- the bottom of the decanter following an inclination with respect to a plane orthogonal to the vertical direction (24), between 0 and 5%,
- the reactor comprising at its upper part a channel (22) allowing the overflow to be evacuated,
- the reactor is equipped at its upper part with a bottomless drum called a "tranquilizer" 25 allowing the admission of effluents without disturbing the settling.
**characterized in that** in the decantation stage, in a steady state:

- the value of the volume flow $Q_s$ of the fraction of sludge leaving the reactor depends on:

• a set value CMs0 of the mass load at the reactor outlet,
• and the concentration Cs of suspended solids in the sludge measured at the outlet of the reactor, so that: $Q_s$ = CMs0 / Cs.

- the value of the volume flow rate $Q_e$ of the fraction of sludge at the reactor inlet depends on:

• a set value CMe0 of the mass load at the reactor inlet,
• and the concentration Ce of suspended solids in the sludge measured at the reactor inlet, so that: $Q_e$ = CMe0 / Ce,

with:

- the set value CMs0 of the mass load at the outlet of the reactor being the nominal mass load CM5 specific to the dewatering treatment unit (5),
- the set value CMe0 of the mass charge at the reactor inlet being such that: 1.1 CMs0 $\leq$ CMe0.

2. Wastewater treatment method according to claim 1, **characterized in that** it comprises upstream of the settling step and downstream of the activated sludge treatment step, a passage through a degassing pit (2), and a clarification step in a clarifier (3), the fraction of sludge to be thickened during the settling step being derived from at least one of the activated sludge treatment steps, degassing, clarification, or membrane-type physical separator.

3. Wastewater treatment method according to any one of the preceding claims, **characterised in that** it comprises a step for starting the feed of the static decanter (4) and a step for starting the feed of the dewatering unit (5), the start of the feed to the dewatering unit taking place at the end of a first delay T1 of between 60 and 200 min, compared to starting the static decanter feed.

4. Wastewater treatment method according to claim 3, **characterized in that** the start of the supply to the static decanter is carried out according to a set flow rate Qe0 following a duration T2 between 0 and 5 min, the flow rate being determined at the end of said delay so that $Q_e$ = CMe0 /Ce,.

5. Wastewater treatment method according to any one of claims 3 or 4, **characterised in that** the supply to the dewatering unit is started at a set rate of Qs0 during a third delay T3 of between 0 and 20 min, the flow rate being determined at the end of said delay so that $Q_s$ = CMs0 /Cs,.

6. Wastewater treatment method according to any one of the preceding claims, **characterised in that** it comprises a step for stopping the supply to the static decanter (4) and a step for stopping the supply to the dewatering unit (5), the stopping of the supply to the dewatering unit occurring at the end of a fourth delay T4 of between 60 and 120 min, compared to stopping the static decanter feed.

7. Wastewater treatment method according to claim 6, **characterised in that** the stage of stopping the supply of the static decanter and the dewatering unit is followed by a emptying step, preferably initiated at the end of a fifth delay T5 of between 0 and 15 min in relation to the shutdown of the supply of the dewatering unit, said emptying during a sixth T6 delay of between 30 and 120 min.

8. Wastewater treatment method according to claim 7, **characterized in that** the static decanter emptying step is followed by a static decanter cleaning step during a seventh T7 delay of between 0 and 60 min.

9. Wastewater treatment method according to any one of the preceding claims, **characterised in that** the settling step is accelerated by means of a reagent, preferably CaCO3, so that the first delay T1 is reduced to a value of less than 70 min.

10. Wastewater treatment plant comprising :

- an aeration basin (1),
- a rapid static decanter (4) extending vertically along an axis (24) and in relation to a dewatering unit (5), the rapid static decanter comprising:

   • a reactor (7),
   • means (14a, 14b) of inlet inlet of the reactor, the means (14a, 14b) of inlet inlet of the reactor being connected to the aeration basin (1),
   • means (15, 16, 30) for regulating the volume flow ($Q_e$) at the reactor inlet,
   • means (27a, 27b) of extraction at the reactor outlet,
   • means (28, 29, 30) for regulating the volume flow ($Q_s$) at the reactor outlet,

**characterized in that**:

- the value of the height H and the value of the cross-sectional area S of the reactor are framed respectively as follows:

$$7 \text{ m2} \leq S \leq 28 \text{ m2}$$

 and

$$2 \text{ m} \leq H \leq 5 \text{ m.}$$

- the bottom of the decanter is devoid of any means of agitation,
- the bottom of the decanter follows an inclination with respect to a plane orthogonal to the vertical direction (24), between 0 and 5%,
- the reactor comprises in its upper part a channel (22) allowing the overflow to be evacuated,
- The upper part of the reactor is equipped with a bottomless drum called a "tranquilizer" 25 allowing the effluent to be admitted without disturbing the settling.

11. Wastewater treatment plant according to claim 10, **characterized in that** a degassing pit (2), and a clarifier (3) or a physical membrane separator, are interposed between the aeration tank and the static decanter, the means of inlet of the reactor being connected to the aeration tank, the degassing pit and the clarifier, so that the decanter can be fed by at least one of the aforementioned aeration tanks, degassing pits, clarifiers.

12. Wastewater treatment plant according to any one of claims 10 to 11, **characterised in that** the means of inlet and extraction of sludge at the inlet and outlet of the reactor respectively comprise an inlet duct (14b) leading into the reactor at the level of its upper part, and an exhaust duct (27a) leading into the reactor at the level of its lower part, as well as a variable speed pump (13, 26).

13. Wastewater treatment plant according to any one of claims 10 to 12, **characterized in that** the means for regulating the mass flow at the inlet and outlet of the reactor, respectively, each comprise a probe (15, 28) for measuring the concentration of suspended solids in the sludge and a flow meter (16, 29), said flow meters and probes being connected to a pump speed controller (30).

**Fig. 1**

**Fig. 2**

Fig. 3

Fig. 4

Fig. 5

## RÉFÉRENCES CITÉES DANS LA DESCRIPTION

**Documents brevets cités dans la description**

- US 6589428 B1
- FR 2820733 A1
- FR 2784093 A1
- WO 2010073222 A